# EUROPÄISCHE PATENTSCHRIFT

(11) **EP 2 260 011 B1**
(45) Veröffentlichungstag und Bekanntmachung des Hinweises auf die Patenterteilung: **05.12.2018**
(21) Anmeldenummer: 09727408.8
(22) Anmeldetag: 31.03.2009
(51) Int. Cl.: C04B 28/26

(54) **BESTÄNDIGE WERKSTOFFE UND BESCHICHTUNGEN AUS ANORGANISCHEN BINDEMITTELN MIT FASERVERSTÄRKUNG**
STRONG MATERIALS OF CONSTRUCTION AND COATINGS COMPRISING INORGANIC BINDERS WITH FIBRE REINFORCEMENT
MATÉRIAUX ET REVÊTEMENTS RÉSISTANTS À BASE DE LIANTS INORGANIQUES RENFORCÉS PAR DES FIBRES

(30) Priorität: 31.03.2008 DE 102008016719
(43) Veröffentlichungstag der Anmeldung: 15.12.2010
(73) Patentinhaber: Sinnotec Innovation Consulting GmbH, 65207 Wiesbaden (DE)
(72) Erfinder: Rathenow, Jörg, 65207 Wiesbaden (DE)
(74) Vertreter: Fuchs Patentanwälte Partnerschaft mbB
(86) Internationale Anmeldenummer: PCT/EP2009/053823
(87) Internationale Veröffentlichungsnummer: WO 2009/121888

(56) Entgegenhaltungen:
- DE-A1- 3 010 457
- DE-A1- 3 409 386
- DE-A1- 4 204 583
- GB-A- 543 620
- JP-A- 2003 165 763

## Beschreibung

Die Erfindung betrifft eine Zusammensetzung beinhaltend entweder ein zementäres oder ein latent hydraulisches Bindemittel, Wasserglas, ein Fasermaterial und ein Flexibilisierungsmittel.

### Stand der Technik:

Kombinationswerkstoffe aus Kunststoff und Glasfasern werden unter Anderem als Formteile in der Autoindustrie verwendet oder kommen als Außenhaut von Schiffen, als Rohrleitungen, Behälter und im Anlagenbau zum Einsatz. Das Patent EP0004712 beschreibt ein Herstellungsverfahren für Kunststoffgegenstände, bei dem flüssige, kunststoffbildende Bestandteile und zerschnittene Glasfasern, welche in einem flüssigen Medium getragen werden, gemischt werden und anschließend in einer Form aushärten.

Die begrenzte Beständigkeit solcher Werkstoffe gegenüber Säuren, Basen, Lösungsmittel, UV-Strahlung und hohen Temperaturen schränkt jedoch ihr Anwendungsspektrum ein. Außerdem sind solche Stoffe teuer weil erdölbasiert und ihre Herstellung und Verarbeitung ist aufgrund benötigter gesundheitsschädlicher Zusätze nicht unbedenklich. Als Beispiel kann die Verwendung von Aminen für die Vernetzung von Epoxid-Werkstoffen angeführt werden.

Aus der Offenlegungsschrift DE19532638 ist ein glasfaserverstärkter mineralischer Kombinationswerkstoff bekannt, der eine Matrix auf der Basis eines hydraulischen Bindemittels aufweist, deren Poren mit einem Polymer gefüllt sind. Wie in anderen ähnlichen Schriften wird auch in diesem Dokument lediglich auf Zement als Bindemittel abgestellt. Im Gegensatz zu genannten ähnlichen Schriften, wird durch DE19532638 aber zumindest eines der Hauptprobleme bei der Verwendung von Zement teilweise gelöst. Eine Zement- bzw. CSH-Matrix enthält nämlich eine Vielzahl von Poren. Dieser Porenraum ist mit einer stark alkalischen Flüssigkeit (pH 13-14) gefüllt, welche unter Anderem durch Alkalien entsteht, die über den Zementklinker in das Bindemittel gelangen. Ein solch basisches Milieu schädigt wiederum die eingelegten Glasfasern. Jedoch ist nicht nur die vorhandene Porenflüssigkeit ein Problem. Die Poren erlauben auch das Vordringen von Flüssigkeiten von der Außenseite des Werkstoffs hin zu den in den Zement eingelagerten Verstärkungselementen und führen zu deren Beschädigung beispielsweise durch Korrosion. Durch das Verfüllen des Porenraums mit Polymeren gemäß DE19532638 wird die Ansammlung solcher Porenflüssigkeiten bzw. das Eindringen von Flüssigkeiten von außen reduziert.

JP 2003 165763 A betrifft einen Werkstoff, der eine Kombination von Schmelzschlackenpulver, Wasserglas und einen Aluminatzement vorsieht.

Zementäre Systeme sind jedoch allgemein nicht säurestabil und durch den Einsatz von Polymeren nimmt die Toleranz gegenüber hohen Temperaturen ab. Außerdem hat die begrenzte Festigkeit dieser Werkstoffe ein hohes Wandstärken zu Festigkeitsverhältnis zur Folge. Dadurch werden, auch bei Verstärkung z.B. durch eine Stahlarmierung z.B. hohe Gebäude realisiert, man stößt hier aber aufgrund des hohen Eigengewichtes bereits jetzt an physikalische Grenzen bezüglich z.B. der Höhe von Gebäuden.

Es ist nun die Aufgabe der vorliegenden Erfindung, einen Werkstoff zur Verfügung zu stellen, der hochbeständig gegen Säuren, Laugen (pH 1 - 14), Salzwasser, weiches Wasser und Lösungsmittel sowie gegen Temperaturen bis 500°C ist, eine hohe Festigkeit bei geringem Gewicht aufweist und eine einfache Verarbeitung zulässt. Zusätzlich soll die Herstellung, die Verarbeitung, der Gebrauch und die Entsorgung für den Nutzer ungefährlich sein. Durch den Einsatz von Massenrohstoffen soll außerdem ein geringer Preis realisierbar sein und der erfindungsgemäße Kombinationswerkstoff soll eine hohe Biegezugfestigkeit aufweisen, die eine effektive und effiziente Konstruktion direkt aus diesem Material ermöglicht. Es sollen sich große Schichtstärken für eine hohe Abrasionsbeständigkeit in einem Arbeitsgang auftragen lassen, ohne die Gefahr der Rissbildung. Insbesondere ist der Werkstoff aufgrund des Flexibilisierungsmittels gut geeignet Risse zu überbrücken, Der Werkstoff soll bei Temperaturen von 5°C bis 50°C auch maschinell zu verarbeiten sein und eine hohe Dichtigkeit aufweisen. Darüber hinaus soll das Ausblühen durch Salze unterbunden werden und der Werkstoff soll eine ausgezeichnete Haftung auf mineralischen Werkstoffen wie Glas, aber auch auf Metallen, Holz und teilweise auf Kunststoffen wie beispielsweise extrudiertem Polystyrol zeigen.

Unter dem erfindungsgemäßen Werkstoff oder Kombinationswerkstoff ist jeweils der Verbund aus Fasern und anorganischem Bindemittel sowie weiteren Zusätzen zu verstehen wie er nachfolgend unter der Bezeichnung "Zusammensetzung" beschrieben wird.

Die oben genannte Aufgabe wird erfindungsgemäß gelöst durch eine Zusammensetzung beinhaltend entweder ein zementäres oder ein latent hydraulisches Bindemittel, Wasserglas, ein Fasermaterial und ein Flexibilisierungsmittel.Der Anteil des Wasserglases an der Zusammensetzung beträgt vorzugsweise 2 bis 99 Gew.-% oder 6 bis 94 Gew.-% oder 11 bis 89 Gew.-% oder 21 bis 79 Gew.-%.

Die Zusammensetzung enthält Wasserglas, das eine SiO₂-Matrix umfassen kann. Ferner liegt entweder ein Zement oder ein latent hydraulisches Bindemittel in der Zusammensetzung vor. Latent hydraulische Bindemittel sind insbesondere Werkstoffe wie sie z.B. in EP1081114 beschrieben werden, wobei der Inhalt der genannten Patentschrift ausdrücklich als Teil der vorliegenden Anmeldung angesehen werden soll. Ferner liegt in der Zusammensetzung ein Fasermaterial und ein Flexibilisierungsmittel vor.

Ein Zement kann eine Calzium-Silikat-Hydrat-(CSH)-Matrix umfassen, in der die Bildung von Ca(OH)₂ formulierungstechnisch und/oder katalysatorgesteuert verhindert wird. Dies sind insbesondere Werkstoffe wie sie z.B. in EP1236702 beschrieben werden, wobei der Inhalt der genannten Patentschrift ausdrücklich als Teil der vorliegenden Anmeldung angesehen werden soll.

Insbesondere sind Zusammensetzungen von Interesse, die neben den oben genannten Inhaltsstoffen mindestens ein weiteres anorganisches Bindemittel oder mindestens einen vorzugsweise anorganischen Füllstoff beinhalten, wobei der Anteil an weiterem anorganischem Bindemittel, Füllstoff und den Fasern zusammen vorzugsweise bei 0,1 bis 79 Gew.-% oder 16 bis 49 Gew.-% oder 26 bis 39 Gew.-% liegt. Dabei beziehen sich Angaben in Gew.-% immer auf die Gesamtzusammensetzung, d.h. den Kombinationswerkstoff.

Von Bedeutung sind auch Zusammensetzungen der folgenden Arten:
Eine Zusammensetzung beinhaltend, neben den oben genannten Inhaltsstoffen, mehrere Wassergläser. Flexibilisierungsmittel sind ausgewählt aus Gummigranulat, PE, PP, ataktischem PE oder PE, flüssigen Polymerdispersionen oder pulverförmigen Polymeren wie Reinacrylate, Styrolacrylat, Polyurethan, Latex oder Kautschuk etc. Bevorzugt enthalten sind mindestens 10 Gew.-% ein oder mehrerer Stoffe aus der Gruppe "Hüttensand, Mikrosilika, Schlacke, Flugasche, Trassmehl, Ziegelmehl, Ölschiefer, Glas, Quarzsand" wobei Stoffe aus der Gruppe "Hüttensand, Glas, Quarzsand" bevorzugt sind.

Eine Zusammensetzung beinhaltend, neben den oben genannten Inhaltsstoffen, zumindest einen Wasserglashärter sowie über 10 Gew.-% Hüttensand und mindestens einen anorganischen Füllstoff, wobei es sich beim anorganischen Füllstoff vorzugsweise um Quarzsand oder Glas handelt.

Eine Zusammensetzung beinhaltend, neben den oben genannten Inhaltsstoffen, Wasserglaspulver sowie 10-60 Gew.-% zumindest eines latent hydraulischen Bindemittels aus der Gruppe "Hüttensand, Flugasche, Trassmehl, Ziegelmehl, Ölschiefer, Mikrosilika" und zumindest einen Zement sowie 0,05-40 Gew.-%, vorzugsweise 5-30 Gew.-%, besonders bevorzugt 11-20 Gew.-% einer die Abbindreaktion steuernden Substanz, bei der es sich unter anderem um ein Metallsalz aus der Gruppe "Metallhydroxid, Metalloxid, kohlenstoffhaltiges Metallsalz, schwefelhaltiges Metallsalz, stickstoffhaltiges Metallsalz, phosphorhaltiges Metallsalz, halogenhaltiges Metallsalz" handeln kann, wobei ein solches Metallsalz vorzugsweise ein Alkalisalz ist.

Eine Zusammensetzung beinhaltend, neben den oben genannten Inhaltsstoffen, ein zementäres oder lantentydraulisches Bindemittel, in dem die Bildung von CaOH formulierungstechnisch und/oder katalysatorgesteuert verhindert wird.

Dabei beziehen sich Angaben in Gew.-% immer auf die Gesamtzusammensetzung, d.h. den Kombinationswerkstoff.

Der Zusatz von Zement in einer Menge von unter 20 Gew.-%, vorzugsweise von 5 - 15 Gew.-% ist möglich. Der Zement reagiert mit dem SiO₂ des Wasserglases unter Bildung von CSH ohne störende Nebenreaktionen zu Kalzium-Hydroxid. Dies führt zu einer schnelleren Frühwasserbeständigkeit des Werkstoffs. Dennoch werden die nachteiligen Eigenschaften einer im Wesentlichen aus Zement bestehenden Matrix nicht beobachtet, weil die zementäre CSH-Matrix vollständig, d.h. kapillarporendicht von der SiO₂-Matrix des Wasserglases umschlossen wird.

Die genannten anorganischen Bindemittel können auch elastifiziert sein, beispielsweise gemäß einem Verfahren wie es in EP1081110 beschreiben ist. Außerdem können oben genannte Bindemittel durch entsprechende Formulierungsänderungen bzw. durch Zusätze für den Einsatz in Kombination mit den Fasermaterialien über einen breiten Bereich auch hinsichtlich der Verarbeitungseigenschaften optimiert werden. Dem Fachmann sind entsprechende Zusätze zur Variierung der Topfzeit, der Verarbeitungsviskosität oder Durchtrocknungszeit bekannt. Durch Zugabe von Bindemitteln, Haftvermittlern, Verdickern, Fließmitteln bzw. Fließverbesserern oder Verflüssigern, sowie Katalysatoren, Komplexbildnern, der Verwendung von verschiedenen Sieblinien oder der Änderung der Füllstoffmenge können die Eigenschaften des Werkstoffs entsprechend den Bedürfnissen angepasst werden. Von Bedeutung ist es hierbei jedoch, die Nebenreaktionen zur Bildung von Ca(OH)₂ zu unterbinden, um die Beständigkeit des Werkstoffs sicherzustellen.

Die beigegebenen Fasern können aus diversen Materialien wie Glas, Stein, Papier, Holz, Zellulose, Polypropylen (PP), Polyethylen (PE), Polyethylenterephthalat, Aramid, Kohlenstoff, Nylon, Eisen, Stahl, Titan, Gold, Silber, Molybdän, Wolfram, Niob etc. bestehen. Dabei können auch Mischungen von Fasern aus verschiedenen Materialien oder das Vorliegen der Fasern als Hohlfasern, in loser Form, als Fäden, Gewebe, Gewirk, Netz, Gitter, Vliesstoff, in gebrochener, geschnittener, gehackter oder gemahlener Form vorteilhaft sein, wobei sowohl lange als auch kurze, dicke wie dünne Fasern in Frage kommen. Eine bevorzugte Faserlänge beträgt 1m bis 10nm, vorzugsweise 0,1-10cm, besonders bevorzugt 0,5-3cm, und der bevorzugte Faserdurchmesser beträgt 1m bis 10nm, vorzugsweise 0,01-5mm, besonders bevorzugt 0,1 -2mm. Die Auswahl der Fasern hängt stark von den zu erzielenden Eigenschaften des Werkstoffs ab. Werden die Fasern zu lang, so erschwert dies aber die Verarbeitung und Faserbrüche treten vermehrt auf. Dünnere Fasern ermöglichen eine höhere Packungsdichte.

Der Anteil der Fasern an der genannten Zusammensetzung beträgt vorzugsweise mindestens 0,001 Gew.-% oder mindestens 0,5 Gew.-% oder mindestens 4 Gew.-% oder mindestens 9 Gew.-%. Der Anteil an Fasern hängt unter Anderem von der Oberfläche bzw. vom Zerkleinerungsgrad der Fasermatrix ab.

Auch wenn von der Zugabe von Fasern als "beimischen", "beigeben" etc. gesprochen und die erfindungsgemäße Zusammensetzung als "Stoffgemisch", "Mischung" etc., bezeichnet wird, so ist damit nicht nur die Herstellung einer Mischung bzw. eine homogene Mischung aus Bindemittel, Zusätzen und Fasern gemeint. Vielmehr ist darunter ein Zustand (bzw. dessen Herstellung) zu verstehen, in dem das anorganische Bindemittel den Raum zwischen den Fasern zumindest teilweise und vorzugsweise im Wesentlichen ausfüllt. Dies umfasst auch eine Imprägnierung von Faserobjekten, die bereits eine bestimmte Form aufweisen, beispielsweise Wellpappe.

Normalerweise ist es gewünscht, dass die anorganische Matrix aus Bindemittel und Zusätzen den Faserzwischenraum praktisch vollständig ausfüllt. Da das Bindemittel in der Lage ist, die Fasern vollständig und flüssigkeitsdicht, d.h. kapillarporenfrei zu umschließen und somit vor schädigenden Einflüssen zu schützen, kann ein wesentlich weiteres Spektrum an Fasern als aus dem Stand der Technik bekannt eingesetzt werden. Dabei bleibt der Werkstoff jedoch wasserdampfdiffusionsfähig. Insbesondere eröffnet der Einsatz des genannten Bindemittels die Möglichkeit, für die Herstellung von Kombinationswerkstoffen auch billige, in Bezug auf ihre Chemikalienresistenz wenig widerstandsfähige Fasern zu verwenden und trotzdem einen außerordentlich beständigen Werkstoff zu erhalten. Der Zusatz von Fasern, beispielsweise aus dem Recyclingprozess, tragen zu den niedrigen Herstellungskosten bei und erlauben durch den Stabilitätsgewinn die Herstellung von dünneren, leichteren Werkstoffen.

Insbesondere bietet sich die erfindungsgemäße Zusammensetzung als Alternative zu faserverstärkten Werkstoffen auf Kunststoffbasis, beispielsweise aus Epoxidharzen und Glasfasern, an. Solche Werkstoffe werden wegen ihrer guten Beständigkeit unter Anderem in Chemieanlagen eingesetzt. Der erfindungsgemäße Werkstoff zeigt jedoch noch eine markant höhere Chemikalienresistenz (konzentrierte Säuren und Laugen sowie Lösungsmittel) als solche Komposite aus Fasern und Kunststoff und ist dabei in der Herstellung wesentlich preiswerter.

Die Verarbeitung im Extruder, per Vakuumverfahren oder mit Putzverarbeitungsmaschinen, sowie das direkte Aufbringen auf mineralische Untergründe wie Ziegel, Beton, Mauerwerk etc. ist ebenso möglich wie der Einsatz des genannten Kombinationswerkstoffs als Teil einer Schichtung oder auch in Form eines selbsttragenden Werkstoffs.

Ein mehrlagiger Aufbau, beispielsweise mit Einbringung in eine Form oder auf einen Formkörper kann folgendermaßen bewerkstelligt werden: Als erste Schicht wird z.B. eine in Bezug auf Chemikalienbeständigkeit optimierte Version des erfindungsgemäßen Werkstoffs oder eine extrem verschleißfeste Variante zum Einsatz kommen. Diese wird beispielsweise mit einer zweiten Schicht aus mit Bindemittel getränktem Fasergelege versehen, was dem Objekt große mechanische Stabilität verleiht. Eine dritte Schicht kann eine dekorative Funktion haben oder für eine erhöhte Widerstandsfähigkeit gegenüber mechanischer Beanspruchung oder gegenüber UV-Strahlung sorgen. Zusätzlich besteht die Möglichkeit, die äußerste Schicht mit Farben, Hochglanz oder Lacken zu überdecken.

Von besonderem Interesse ist auch die Anwendung des genannten Kombinationswerkstoffs als Beschichtung, beispielsweise auf korrosionsgefährdeten Objekten aus Stahl oder Eisen wie Pipelines, Schiffsteilen, Spundwänden, Teilen von Off-Shore-Anlagen oder Chemieanlagen.

Der erfindungsgemäße Werkstoff eignet sich nicht nur als Beschichtung, sondern auch als preiswerte und hochbeständige Grundsubstanz für Formkörper oder selbsttragende Werkstoffe. Bei der Herstellung von selbsttragenden Werkstoffen und Bauteilen aus genanntem Kombinationswerkstoff werden z.B. in einem ersten Schritt Fasern, beispielsweise in Form von Altpapierschnitzeln, mit dem Bindemittel, welches in Pulverform vorliegen kann, gemischt. In einem zweiten Schritt erfolgt die Anmischung der Bindemittel-Faser-Mischung mit Wasser oder - wenn eine Elastifizierung gewünscht ist, mit Polydispersion. Je nach Einsatzgebiet des herzustellenden Objekts sind weitere Zusätze denkbar (vgl. oben). Anschließend kann der Werkstoff ausgegossen, mit Pinsel, Rolle oder Spachtel verteilt oder aufgespritzt werden. Die Auftragung erfolgt in das Innere oder das Äußere einer Form, wobei diese Form beispielsweise für die Herstellung von Platten auch eine Folie sein kann. Auch hier kommt natürlich eine Endbeschichtung mit handelsüblichen Farben oder Lacken zur dekorativen Gestaltung in Frage.

In einer weiteren Ausführungsform kann der genannte Kombinationswerkstoff auch als Kleber zum Einsatz kommen, wobei u.A. das Kleben auf Glas oder Keramik, das Verkleben von Glas z.B. auf mineralischen Untergünden, Metallen oder Holz etc. von Interesse ist. Dies wird durch die exzellenten Hafteigenschaften des Werkstoffs ermöglicht, welche wiederum eine Folge der dicht schließenden Matrix sind. Der Werkstoff ist auch geeignet zum Verkleben von Holz - in Form von Sägemehl, Holzraspeln, Holzwolle oder Holzspänen - zu Platten oder anders geformten Objekten.

Eine Flexibilisierung wird durch Beimischung von Gummigranulat, PE, PP, ataktischem PE oder PE, flüssigen Polymerdispersionen oder pulverförmigen Polymeren wie Reinacrylate, Styrolacrylat, Polyurethan, Latex oder Kautschuk etc. erreicht. Flexibilität meint, dass der Werkstoff eine Duktilität oder Biegezugfestigkeit aufweist, die hervorragende rissüberbrückende Eigenschaften mit sich bringen.

Eine Erhöhung der Isolierfähigkeit kann beispielsweise durch Beimischung von Hohlfasern (analog zu Eisbärenfell), organischen bzw. anorganischen Leichtzuschlagstoffen wie Styropor, Polystyrol, Polyuretan-Schaum, Nanogel (Fa. Cabot), Blähgas, Blähton, Wasserglasschaum, expandierendem Polystyrol, Holzwolle, Holzspänen, Dämmkork oder Poraver etc. erreicht werden.

Eine Variierung der elektrischen und/oder thermischen Leitfähigkeit kann beispiesweise durch Beimischung von Ruß, Metallpulver, Metallverbindungen, orientierten Kohlenstofffasern, leitfähigen Polymeren, leitfähigen Metalloxiden oder auch nanoskaligem Indium-Zinn-Oxid, beispielsweise für transparente Beschichtungen, erreicht werden.

Die Herstellung von transluzenten oder transparenten Werkstoffen kann beispielsweise durch Beimischen von transparenten Füllstoffen wie Glasmehl, beispielsweise aus Recycling-Glas erreicht werden

Eine Erhöhung des Verschleißwiderstands kann beispielsweise durch Beimischen von Borverbindungen, Siliciumcarbid, Diamant, Korund, Molybdänsulfid etc. erreicht werden.

Eine Verbesserung der Zelladhäsion und Biokompatibilität kann beispielsweise durch Oberflächenbeschichtungen, die mittels chemischer oder physischer Gasphasenabscheidung (chemical- / physical-vapour-deposition) aufgebracht werden, d.h. sogenannte CVD- bzw. PVD-Oberflächenbeschichtungen. Dies verbessert die Eignung des erfindungsgemäßen Werkstoffs beispielsweise für die Herstellung von Bioreaktoren, Labormaterialien oder auch als medizinische Implantate oder Beschichtungen von medizinischen Implantaten.

Das Erzeugen einer definierten Porosität in der Bindemittelmatrix bzw. der Oberfläche geschieht beispielsweise durch gezielten Einbau von Platzhaltern wie Wachsen, Paraffinen, leicht flüchtigen Verbindungen, auswaschbaren Verbindungen (z.B. Polyvinylpyrrolidon / PVP) oder thermisch zersetzbaren Verbindungen, welche anschließend ausgewaschen bzw. thermisch zersetzt werden.

Optional kann eine Pigmentierung, Hydrophobierung, Oleophobierung, der Zusatz von Gleitadditiven, Teflon, Bioziden, Polymeren zur Elastifizierung, Geruchsstoffen oder Additiven bzw. Fasern zur Kapillaraktivierung statt finden.

Der erfindungsgemäße Kombinationswerkstoff ist durch seine Eigenschaften vielseitig einsetzbar.

Im Bootsbau kann er beispielsweise in Form einer ersten Schlämmschicht als Ersatz für einen "Gel Coat" dienen. Der weitere Aufbau der Beschichtung erfolgt durch das Auftragen einer Schlämme des Kombinationswerkstoffs, die durch ein Glasfasergewebe verstärkt ist und dessen Bindemittelmatrix beispielsweise aus SD1 (ein Produkt der Firma Remmers) besteht. Es ist jedoch auch ein klassischer Aufbau mittels Gel Coat in Kombination mit einer zweiten Schicht aus erfindungsgemäßem glasfaserarmiertem Kombinationswerkstoff möglich. Ein solcher Aufbau gewährleistet eine sehr hohe Abrasionsbeständigkeit sowie eine sehr geringe Verwindungsneigung, wobei bei Bedarf eine beliebige Flexibilisierung durch Zusatz von Polymerdispersionen erreicht werden kann. Dabei ist der resultierende Schichtaufbau wasserdicht und glatt bzw. ist die Rutschfestigkeit durch Einstellung der Sieblinie der Füllstoffe beliebig einstellbar. Die Glasfasermatrix ist so ausgezeichnet geschützt, und der quasi monolithische Verbund zeigt zudem eine sehr gute Haftung. Des Weiteren ist der Werkstoff mit handelsüblichen Pigmenten färbbar und gewährleistet eine exzellente Farbtonbeständigkeit und UV-Stabilität. Als Antifouling können Stoffe wie Wachse, Biozide oder Silikonöle eingemischt werden. Denkbar ist weiterhin eine Leichtbauweise durch organische oder anorganische Leichtzuschlagstoffe in der Bindemittelmatrix bzw. durch Verwendung von Kohlenstoff- oder Leichtbaufasern. Jeder beliebige weitere Farb- oder Lackaufbau mit handelsüblichen Beschichtungssystemen ist möglich.

Insbesondere kommt für den erfindungsgemäßen Kombinationswerkstoff auch ein Einsatz als Beschichtung oder auch als Grundsubstanz für Rohre und Behälter in Frage. Vorteilhaft ist in diesem Zusammenhang ein mehrlagiger Aufbau. Dieser weist beispielsweise eine innere auf Abrasions-, Temperatur-, Lösungsmittel- (polar und unpolar) und Chemikalienbeständigkeit (pH 1-15) ausgerichtete Schicht (beispielsweise SiO₂-System) auf. Als äußere Haut erscheint eine flexibilisierte und thermisch isolierende Schicht (beispielsweise CSH-Matrix mit Glasfaserarmierung) vorteilhaft. Dadurch dass der erfindungsgemäße Werkstoff einen ausgezeichneten Faserverbund bzw. eine monolithische Verklebung der Fasern gewährleistet und überall einen weitestgehend identischen thermischen Ausdehnungskoeffizienten aufweist (geringe thermische Spannung), eignet er sich auch für kryogene und Hochtemperatur-Anwendungen. Falls solche Funktionalitäten nicht bereits in oben erwähnte Schichten integriert wurden, können den genannten Objekten durch zusätzliche Schichten weitere Eigenschaften verliehen werden, wie elektrische Leitfähigkeit, thermische Isolierung, UV-Schutz etc.

Aufgrund der hohen Festigkeit bei geringem Gewicht lassen sich aus diesem Werkstoff sehr gut Fertigbauteile für den Hochbau bzw. Tiefbau fertigen. Außerdem lassen sich auch leicht au der Baustelle Bauteile und Konstruktionen vor Ort erstellen. Hierzu werden die Armierungsgewebe oder Wellpappen z.B. in Verschalungen eingebracht und das Bindemittel z.B. hinzugepumpt, verdichtet und ausgehärtet. Somit lassen sich sehr leichte (preiswerte) Bauteile realisieren, sehr filigrane Geometrien erzeugen und aufgrund des günstigen Gewichts zu Festigkeitsverhältnis außergewöhnlich hohe Bauwerke konstruieren.

Ein weiteres Anwendungsgebiet für den erfindungsgemäßen Kombinationswerkstoff ist die Imprägnierung von billigen und unbeständigen Werkstoffen auf Faserbasis, wie beispielsweise Wellpappe. Eine einseitige Beschichtung bzw. Imprägnierung mit dem Bindemittel, welches gegebenenfalls weiter Zusätze beinhaltet, verbessert deren mechanische, physikalische und chemische Beständigkeit und macht sie z.B. wasserfest. Einzelne oder mehrere Lagen offener oder geschlossener Wellen aus Wellpappe können mit dem erfindungsgemäßen Werkstoff verklebt werden und ergeben so einen Baustoff mit Strömungskanälen, der z.B. für Wärmetauschanwendungen, als Trägermaterial für Bioreaktorprozesse oder als Isolier- bzw. als Leichtbaumaterial genutzt werden kann. Bei solchen Wellpappenstrukturen kann durch unterschiedliche Imprägnierungsgrade des Papiers in der Pappenebene auch nach der Trocknung noch eine Kapillaraktivität bzw. Porosität eingestellt werden, die senkrecht zur Papierebene deutlich geringer oder sogar nahe null ist. Das bedeutet, durch die Imprägnierung und Ausrichtung der Wellpappenbögen ist die gezielte Einstellung der Kapillaraktivität möglich. Dies ist bauphysikalisch besonders wichtig, um den Feuchtigkeitstransport in der Wand steuern bzw. sicherstellen zu können. Dies zeigt, dass nicht in jedem Fall ein vollständiges Ausfüllen des Faserzwischenraums gewünscht sein muss, sondern der Imprägnierungsgrad gezielt eingesetzt werden kann, um die Eigenschaften des Kombinationswerkstoffs zu steuern. Zusätzlich können Leichtzuschlagstoffe für eine bessere Wärmeisolierung sorgen, oder das Innere der Wellpappe kann ausgefüllt werden, um eine höhere mechanische Widerstandsfähigkeit bzw. Stabilität des Baustoffs zu erreichen. Wie oben bereits ausgeführt, können durch entsprechende Zusatzstoffe noch einige weitere Eigenschaften wie die Leitfähigkeit beeinflusst werden. Natürlich bieten sich auch Beschichtungen von Gipsplatten, Metallen, Legierungen wie Stahl, sowie Holz bzw. Holzverbundplatten an. Eine solche Beschichtung aus erfindungsgemäßem Kombinationswerkstoff kann einseitig oder zweiseitig aufgetragen werden und verbessert die mechanische, physikalische und chemische Beständigkeit bzw. verleiht Wasser- und Feuerfestigkeit. Diese Eigenschaften prädestinieren den erfindungsgemäßen Werkstoff auch für den Einsatz als Katalysatorträger, in Mikroreaktoren, als Molekularsieb oder Membran, denn solche Objekte werden oft in einem chemisch aggressiven oder in Bezug auf die Umgebungstemperatur anspruchsvollen Umfeld eingesetzt. Im Falle eines Einsatzes als Katalysatorträger kann der Katalysator bereits bei der Herstellung des Werkstoffs beigemischt oder später aufgetragen werden.

Ein weiteres Einsatzgebiet für den erfindungsgemäßen Kombinationswerkstoff ergibt sich aus der Verwendung von Papierfasern. Das Bindemittel wird dabei mit Papierfasern, z.B. in Form von Altpapierschnitzeln, sowie gegebenenfalls Leichtzuschlagstoffen oder anderen Additiven gemischt. Nach der Trocknung entstehen beständige Platten oder andere Körper mit guten isolierenden, leitenden, mechanischen bzw. thermischen Eigenschaften und einer guten Resistenz gegen Chemikalien. Die Fertigungskosten eines solchen Werkstoffs sind gering. Alternativ oder zusätzlich kann das Bindemittel auch mit anderen preiswerten und gegebenenfalls aus dem Recycling stammenden Stoffen wie Polymerschnitzeln bzw. -fasern, Bauschutt oder Holzschnitzeln gemischt werden. Diese Stoffe können sowohl einzeln als auch in Kombination eingesetzt werden, und die so hergestellten Kombinationswerkstoffe sind aufgrund Ihrer Hafteigenschaften hervorragend als Spachtelmasse zur Egalisierung von beliebigen Oberflächen geeignet.

Die folgenden Beispiele sind nicht erfindungsgemäß.

### Beispiel 1

Eine Stoffmischung aus 27 Gew.% Kaliumwasserglaspulver, 23 Gew.-% Hüttensand, 4 Gew.-% Portlandzement, 0,5 Gew.-% Lithiumhydroxid, 0,5 Gew.-% Kaliumsulfat und 45 Gew.-% Glaspulver wird mit Wasser gemischt und auf eine Folie aufgetragen wird, wobei vorgängig noch Fasern, z.B. Glasfasern, zugesetzt werden können. Anschließend wird ein Glasfasergewebe auf diese Schicht aufgelegt, wobei dies nass in nass, nach dem Abtrocknen oder auch nach dem Durchtrocknen der Schicht geschehen kann. Das Glasfasergewebe wird mit derselben Stoffmischung wie oben beschrieben getränkt und überschichtet. Nach einer 28-tägigen Trocknung und Aushärtung bei Raumtemperatur und 50% relativer Luftfeuchtigkeit wird der Probekörper in die folgenden Flüssigkeiten eingetaucht bzw. eingelegt: 5% Salzsäure, 5% Salpetersäure, 5% Buttersäure, 5% NaOH, Aceton, Diesel, Brennspiritus. Auch nach 14-tägiger Lagerung in den genannten Flüssigkeiten zeigt der Probekörper keine nennenswerten Veränderungen der Oberfläche, und auch die Belastung durch eine offene Flamme bis 500°C übersteht die Oberfläche ohne nennenswerte Beschädigung.

### Beispiel 2

Eine Stoffmischung aus 24 Gew.% Kaliumwasserglaspulver, 29 Gew.-% Hüttensand, 5 Gew.-% Portlandzement, 0,5 Gew.-% Lithiumhydroxid, 0,5 Gew.-% Lithiumsulfat und 41 Gew.-% Quarzsand wird mit Wasser versetzt und wie in Beispiel 1 verarbeitet, wobei Wellpappe statt eines Glasfasergewebes zur Imprägnierung eingesetzt wird und die aufgetragene Schichtdicke beidseitig der Wellpappe 2mm beträgt. Nach einer Trocknungszeit von 28 Tagen bei gleichen Bedingungen wie in Beispiel 1, werden die folgenden Flüssigkeiten auf die Oberfläche des Probekörpers getropft: 5% Salzsäure, 5% Salpetersäure, 5% Buttersäure, 5% NaOH, Aceton, Diesel, Brennspiritus. Die Betropfung wird 14 Tage lang täglich wiederholt, wobei die Flüssigkeit jeweils auf der Probekörperoberfläche belassen wird. Dennoch finden bis zum Ende des 14-tägigen Versuchszeitraums keine nennenswerten Veränderungen der Oberfläche statt und auch deren Belastung mit einer bis 500°C heißen Flamme führt zu keiner nennenswerten Beschädigung.

### Beispiel 3

Eine Stoffmischung aus 21 Gew.% Kaliumwasserglaspulver, 28 Gew.-% Hüttensand, 7 Gew.-% Portlandzement, 0,5 Gew.-% Lithiumhydroxid, 0,5 Gew.-% Kaliumsulfat und 33 Gew.-% Quarzsandpulver wird mit Wasser gemischt und anschließend werden 10 Gew.-% Altpapierschnitzel, weiche vorgängig in Wasser aufgeweicht worden sind, zugegeben. Man erhält eine leicht formbare und modellierbare Masse, aus der sich hervorragend Formkörper und Beschichtungen beliebiger Struktur formen lassen. Ein solcher Formkörper wird nach 28 Tagen Trocknungszeit unter den gleichen Bedingungen wie in Beispiel 1 mit folgenden Flüssigkeiten betropft: 5% Salzsäure, 5% Salpetersäure, 5% Buttersäure, 5% NaOH, Aceton, Diesel, Brennspiritus. Die Betropfung der Formkörperoberfläche wird 14 Tage lang täglich wiederholt, wobei die Flüssigkeit jeweils auf der Probekörperoberfläche belassen wird. Dennoch finden bis zum Ende des 14-tägigen Versuchszeitraums keine nennenswerten Veränderungen der Oberfläche statt und auch deren Belastung mit einer bis 200°C heißen Flamme führt zu keiner nennenswerten Beschädigung. Wird dieser Kombinationswerkstoff als Beschichtung z.B. auf Stahl oder Glas aufgebracht, so erhält man Haftzugwerte von >5N/mm2.

### Beispiel 4

Eine Stoffmischung aus 30 Gew.% Kaliumwasserglaspulver, 20 Gew.-% Hüttensand, 6 Gew.-% Portlandzement, 0,5 Gew.-% Lithiumhydroxid, 0,5 Gew.-% Lithiumsulfat und 23 Gew.-% Glaspulver wird mit Wasser gemischt und anschließend mit 10 Gew.-% Altpapierschnitzel aus Zeitungen und 10 Gew.-% expandierendes Polystyrol mit einer Korngröße von ca. 3mm versetzt. Nach dem Mischen erhält man eine leicht formbare und modellierbare Masse, aus der sich hervorragend Formkörper und Beschichtungen beliebiger Struktur formen lassen. Ein solcher Formkörper wird nach 28 Tagen Trocknungszeit unter den gleichen Bedingungen wie in Beispiel 1 mit folgenden Flüssigkeiten betropft: 5% Salzsäure, 5% Salpetersäure, 5% Buttersäure, 5% NaOH, Aceton, Diesel, Brennspiritus. Die Betropfung der Formkörperoberfläche wird 14 Tage lang täglich wiederholt, wobei die Flüssigkeit jeweils auf der Probekörperoberfläche belassen wird. Dennoch finden bis zum Ende des 14-tägigen Versuchszeitraums keine nennenswerten Veränderungen der Oberfläche statt, und auch deren Belastung mit einer bis 100°C heißen Flamme führt zu keiner nennenswerten Beschädigung. Wird dieser Kombinationswerkstoff als Beschichtung z.B. auf Stahl oder Glas aufgebracht, so erhält man Haftzugwerte von >5N/mm2.

## Patentansprüche

1. Kombinationswerkstoff beinhaltend mindestens ein anorganisches Bindemittel und ein Fasermaterial, **dadurch gekennzeichnet, dass** es sich bei dem anorganischen Bindemittel um ein Wasserglas handelt, wobei der Anteil des Wasserglases an dem Kombinationswerkstoff 2 - 99 Gew.-% beträgt und das Fasermaterial als Gewebe und/oder Gewirk und/oder Gitter und/oder Netz und/oder Vliesstoff und/oder als Hohlfasern vorliegt, wobei in dem Kombinationswerkstoff neben Wasserglas ein zementäres oder latent hydraulisches Bindemittel vorliegt, sodass die Bildung von Calziumhydroxid formulierungstechnisch und/oder katalysatorgesteuert verhindert wird, **dadurch gekennzeichnet, dass** er durch Beimischung von Gummigranulat, PE, PP, flüssigen Polymerdispersionen oder pulverförmigen Polymeren ausgewählt aus der Gruppe bestehend aus Reinacrylat, Styrolacrylat, Polyurethan, Latex und Kautschuk, flexibilisiert ist.

2. Kombinationswerkstoff nach Anspruch 1, **dadurch gekennzeichnet, dass** der Anteil des Fasermaterials an dem Kombinationswerkstoff mindestens 0,001 Gew.-% beträgt.

3. Kombinationswerkstoff nach einem oder mehreren der vorhergehenden Ansprüche, **dadurch gekennzeichnet, dass** er mindestens ein weiteres anorganisches Bindemittel oder mindestens einen anorganischen Füllstoff enthält, wobei der Anteil an diesen Stoffen und dem Fasermaterial zusammen 0,1 bis 79 Gew.-%, bezogen auf den Kombinationswerkstoff, beträgt.

4. Kombinationswerkstoff nach einem oder mehreren der vorhergehenden Ansprüche, **dadurch gekennzeichnet, dass** er
- ein oder mehrere Wassergläser und mindestens 10 Gew.-% eines oder mehrerer Stoffe aus der Gruppe Hüttensand, Mikrosilika, Schlacke,
Flugasche, Trassmehl, Ziegelmehl, Ölschiefer, Glas oder Quarzsand oder
- Wasserglaspulver und zumindest einen Wasserglashärter und über 10 Gew.-% Hüttensand und mindestens einen weiteren anorganischen Füllstoff oder
- Wasserglaspulver und 10 - 60 Gew.-% eines latent hydraulischen Bindemittels aus der Gruppe Hüttensand, Mikrosilika, Flugasche, Trassmehl, Ziegelmehl, Ölschiefer und Zement sowie 0,5 - 40 Gew.-% einer die Abbindereaktion steuernden Substanz aus der Gruppe Metallhydroxid, Metalloxid, kohlenstoffhaltiges Metallsalz, schwefelhaltiges Metallsalz, stickstoffhaltiges Metallsalz, phosphorhaltiges Metallsalz, halogenhaltiges Metallsalz.

5. Kombinationswerkstoff nach einem oder mehreren der vorhergehenden Ansprüche, **dadurch gekennzeichnet, dass** das als Gewebe, Gewirk, Gitter, Netz, Vliesstoff oder als Hohlfasern vorliegende Fasermaterial aus den anorganischen Materialien Glas oder Stein, den organischen Materialien Papier, Holz, Zellulose, Polypropylen, Polyethylen, Aramid, Kohlenstoff, Nylon oder Polyethylenterephthalat oder den metallischen Fasern wie Eisen, Stahl, Titan, Gold, Silber, Molybdän, Wolfram oder Niob besteht.

6. Formkörper, beinhaltend oder bestehend aus einem Kombinationswerkstoff nach einem oder mehreren der vorhergehenden Ansprüche.

7. Beschichtung, bestehend aus einem Kombinationswerkstoff nach einem oder mehreren der vorhergehenden Ansprüche 1 bis 5.

## Claims

1. Combination material comprising at least one inorganic binder and a fibre material, **characterized in that** the inorganic binder is a water glass, wherein the proportion of the water glass in the combination material is 2 - 99 wt.-% and the fibre material is in the form of woven and/or knitted fabric and/or mesh and/or netting and/or nonwoven and/or as hollow fibres, wherein the fibre material is in the form of a woven and/or knitted fabric and/or mesh and/or and/or nonwoven and/or the form of hollow fibres, and wherein the fibre material is in the form of a woven and/or knitted fabric and/or mesh and/or and/or nonwoven and/or as hollow fibres, wherein a cementary or latent hydraulic binder is present in the combination material in addition to water glass, so that the formation of calcium hydroxide is prevented by formulation and/or catalyst control, **characterized in that** it is flexibilized by admixture with rubber granulate, PE, PP, liquid polymer dispersions or powdered polymers selected from the group consisting of pure acrylate, styrene acrylate, polyurethane, latex and rubber.

2. Combination material according to claim 1, **characterized in that** the proportion of the fibre material in the combination material is at least 0.001 wt.-%.

3. Combination material according to one or more of the preceding claims, **characterized in that** it contains at least one further inorganic binder or at least one inorganic filler, wherein the proportion of these substances and the fibre material together is 0.1 to 79 wt.-%, based on the combination material.

4. Combination material according to one or more of the preceding claims, **characterized in that** it
- one or more water glasses and at least 10 wt.-% of one or more substances from the group slag sand, microsilica, slag, fly ash, trass flour, brick flour, oil shale, glass or quartz sand, or
- water glass powder and at least one water glass hardener and over 10 wt.-% of granulated blast furnace slag and at least one further inorganic filler or
- Water glass powder and 10 - 60 wt.-% of a latent hydraulic binder from the group consisting of granulated slag, microsilica, fly ash, trass flour, brick flour, oil shale and cement as well as 0.5 - 40 wt.-% of a substance controlling the setting reaction from the group consisting of metal hydroxide, metal oxide, carbon-containing metal salt, sulphur-containing metal salt, nitrogen-containing metal salt, phosphorus-containing metal salt, halogen-containing metal salt.

5. Combination material according to one or more of the preceding claims, **characterized in that** the fibre material present as woven fabric, knitted fabric, mesh, net, nonwoven fabric or as hollow fibres consists of the inorganic materials glass or stone, the organic materials paper, wood, cellulose, polypropylene, polyethylene, aramide, carbon, nylon or polyethylene terephthalate or the metallic fibres such as iron, steel, titanium, gold, silver, molybdenum, tungsten or niobium.

6. Shaped articles comprising or consisting of a combination material according to one or more of the foregoing claims.

7. Coating consisting of a combination material according to one or more of the preceding claims 1 to 5.

## Revendications

1. Matériau combiné comprenant au moins un liant inorganique et un matériau fibreux, **caractérisé en ce que** le liant inorganique est un verre soluble, dans lequel la proportion du verre soluble dans le matériau de combinaison représente de 2 à 99 % en poids et le matériau fibreux se présente sous la forme d'étoffe tissée et/ou tricotée et/ou de maille et/ou de filet et/ou de non-tissé et/ou sous la forme de fibres creuses, dans lequel un liant cimentaire ou hydraulique latent est présent dans le matériau combiné en plus du verre soluble, de sorte que la formation d'hydroxyde de calcium est empêchée par formulation et/ou contrôle du catalyseur, **caractérisé en ce qu'**il est rendu flexible par mélange avec un granulé en caoutchouc, PE, PP, dispersions liquides polymères ou polymères en poudre choisis parmi le groupe constitué d'acrylate pur, d'acrylate du styrène, de polyuréthane, de latex et de caoutchouc.

2. Matériau combiné selon la revendication 1, **caractérisé en ce que** la proportion du matériau fibreux dans le matériau combiné est d'au moins 0,001 % en poids.

3. Matériau combiné selon une ou plusieurs des revendications précédentes, **caractérisé en ce qu'**il contient au moins un autre liant inorganique ou au moins une charge inorganique, dans lequel la proportion de ces substances et du matériau fibreux ensemble représente de 0,1 à 79 % en poids, par rapport au matériau combiné.

4. Matériau combiné selon une ou plusieurs des revendications précédentes, **caractérisé en ce qu'**il est
- un ou plusieurs verres à eau et au moins 10 % en poids d'une ou plusieurs substances du groupe sable de laitier, microsilice, scories, cendres volantes, poudre de trasse, farine de brique, schiste bitumineux, verre ou sable de quartz, ou
- de poudre de verre soluble et d'au moins un durcisseur de verre soluble et plus de 10 % en poids de laitier granulé de haut fourneau et d'au moins une autre charge inorganique ou
- Poudre de verre soluble et 10 à 60 % en poids d'un liant hydraulique latent choisi dans le groupe constitué de scories granulées, de microsilice, de cendres volantes, de poudre de trasse, de farine de brique, de schiste bitumineux et de ciment, et 0,5 à 40 % en poids d'une substance régulatrice de réaction de prise choisie dans le groupe constitué par les hydroxyde métallique, oxyde métallique, sel métallique carboné, sel métallique contenant du soufre, sel métallique contenant de l'azote, sel métallique contenant du phosphore et sel métallique contenant un halogène.

5. Matériau combiné selon une ou plusieurs des revendications précédentes, **caractérisé en ce que** le matériau fibreux présent sous forme de tissu, de tricot, de maille, de filet, de non-tissé ou sous forme de fibres creuses est constitué des matériaux inorganiques verre ou pierre, des matériaux organiques papier, bois, cellulose, polypropylène, polyéthylène, aramide, carbone, nylon ou polyéthylène téréphtalate ou les fibres métalliques comme le fer, acier, titane, or, argent, molybdène, tungstène ou niobium.

6. Corps façonné contenant ou consistant en un matériau combiné selon une ou plusieurs des revendications précédentes.

7. Revêtement constitué d'un matériau combiné selon l'une ou plusieurs des revendications précédentes 1 à 5.
